# EUROPEAN PATENT SPECIFICATION

(11) **EP 1 890 456 B1**
(45) Date of publication and mention of the grant of the patent: **12.11.2014**
(21) Application number: 06025859.7
(22) Date of filing: 13.12.2006
(51) Int. Cl.: H04L 29/08, H04L 29/06

(54) **Apparatus for transcoding encoded content**
Apparaus zur Transkodierung von kodierten Inhalt
Appareil de transcodage d'un contenu codé

(30) Priority: 15.08.2006 US 822469 P
(43) Date of publication of application: 20.02.2008
(73) Proprietor: NERO AG, 76307 Karlsbad (DE)
(72) Inventor: Lesser, Richard, 76227 Karlsruhe (DE); Rabold, André, 76275 Ettlingen (DE)
(74) Representative: Zimmermann, Tankred Klaus

(56) References cited:
- US-A1- 2003 200 337
- US-A1- 2003 225 723
- US-A1- 2005 265 395

## Description

The present invention is in the field of content provision to users, within an environment having a large variety of different content formats, as for example available on the world wide web.

Nowadays, a large variety of different content formats are known and utilized in different applications. For example referring to audio codecs, several codecs as for example WAVE (WAVE = waveform audio format used by Microsoft Windows and IBM), MPEG4 (MPEG = moving pictures expert group), MP3 (MP3 = MPEG-1 layer 3), AAC (AAC = advanced audio coding) etc. are different codecs, making use of different coding algorithms. With respect to mobile applications, i.e. usage of mobile phones, PDA (PDA = personal digital assistant), portable computers, etc. not all available content formats can be supported. This is due to the fact that portable devices lack of processing power and memory resources that advanced content formats necessitate for decoding. As part of the state of the art, a user trying to access content, which is available in a format that is not decodable on the corresponding device, uses a transcoding entity to change the coding algorithm of the desired content to a format that the user can decode on his device. In order to do so the user has to download or to retrieve the desired content, which he cannot decode. Once the content is available on the user's device, the user provides the content to a transcoder, which changes the coding algorithm of the content, and in turn provides the transcoded content to the user.

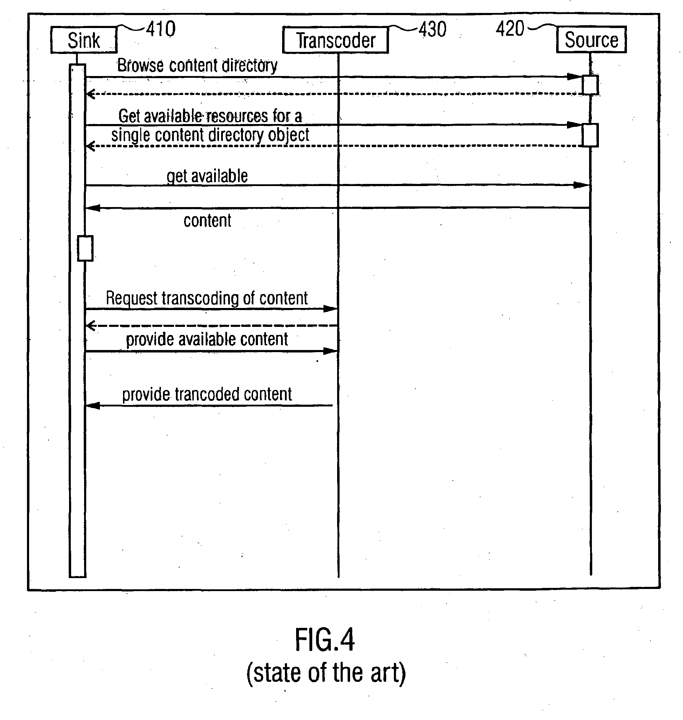

Fig. 4 illustrates an example of the mechanism described above. Fig. 4 shows a sink 410 trying to access a certain content available at a content source 420. Fig. 4 displays a message sequence chart of the state of the art transcoding procedure. In a first step the sink 410 browses the content directory available from the content source 420. Once the sink 410 has found the desired content, it gets the available resources for the content directory object. Although the resource of the desired content indicates to the sink 410 that it cannot decode the content, it gets the content from the content source 420. Since the sink 410 is not capable of decoding the content, which can for example be due to lacking processing or memory resources, the sink 410 requests a transcoding of the content from the transcoder 430. After the transcoder has acknowledged the transcoding of the content the sink 410 now provides the available content to the transcoder 430, upon which the transcoder 430 can provide the transcoded content to the sink 410.

As indicated by the transcoding example illustrated in Fig. 4, the state of the art procedure requires a lot of data transfer. First, the sink 410 has to download the content, although it is not capable of decoding it, then it has to upload the content to the transcoder 430, and finally the transcoder 430 has to upload the transcoded content to the sink 410. The state of the art procedure is very disadvantageous, as it requires a huge amount of data transfer, it is very inefficient and very time intensive.

With the state of the art procedures, user satisfaction is very limited. Especially for real-time applications, the state of the art procedure is not feasible.

US2003/0200337 A1 discloses a system and method for transferring multimedia information from a source location to a destination location through one or more networks, which may be different. The system has a source output which provides a first stream of information in a first format. The system also has a destination input which receives a second stream of information in a second format. A proxy transcoder server is coupled between the source output and the destination input. The proxy transcoder server has a transcoder module transcoding data. The proxy transcoder server also has a capability module identifying a first capability of the source output and a second capability of the destination input, and selecting a transcoding process based upon the first capability and the second capability. US2003/0200337 A1 provides a method and system for transcoding information, as for example a video, audio, etc. data from a first format to a destination format using a proxy transcoder server having a plurality of transcoding processes, where at least one is selected for transcoding the information.

US2003/0225723 A1 discloses an intermediate content transcoder. An intermediate content transcoder can include the communicative receiver configured to receive mastered content while it is in transit from a content source to at least one content sink in a content distribution network, and a communicative transmitter configured to transmit the transcoded content to one or more of the content sinks. A set of content transformations can also be provided. Furthermore, the intermediate content transcoder can include a set of conditions for selecting individual ones of the content transformations to be applied to master content received through the communicative receiver. Finally, the intermediate content transcoder can include a transcoder configured to apply the selected individual ones of the content transformations to the master content. The application of the content transformations can produce transcoded content. The communicative transmitter, in turn, can forward the produced transcoded content to one or more of the content sinks.

US2005/0265395 A1 discloses a system for providing a multi-media service to a portable device. The multimedia service system includes a multimedia source, a hardware transcoder, an interface unit, a storage unit and a portable device. The multimedia source provides multimedia contents including video and/or audio data. The hardware transcoder converts the multimedia contents into contents having a format suitable for a display device of the portable device. The interface unit transmits the contents converted by the transcoder. The storage unit stores therein the contents received through the interface unit. The portable device receives the contents from the storage unit and displays the content. The transcoder changes at least one of the video and/or audio formats, a bandwidth or data rate, a frame rate and a resolution of the contents provided for the multimedia source.

It is the objective of the present invention to provide an improved concept for transcoding content, which necessitates a lower amount of data transfer and enables real-time provision of transcoded content.

The objective is achieved by an apparatus for transcoding according to claim 1 and a method for transcoding according to claim 12.

The present invention provides an apparatus for transcoding encoded content, the encoded content being encoded using a first coding algorithm, with a first interface for communicating with a content sink, the first interface being adapted for receiving a request for content being encoded using a second coding algorithm and for providing the transcoded content being encoded using the second coding algorithm. The apparatus further comprises a second interface for communicating with a content source, being adapted for providing a request for the encoded content being encoded using the first coding algorithm and for receiving the encoded content being encoded using the first coding algorithm. The apparatus further comprising a processing unit being adapted for processing the encoded content being encoded using the first coding algorithm to provide the transcoded content being encoded using the second coding algorithm.

The present invention further provides a method for providing transcoded content to a content sink, the content being encoded using a first coding algorithm, comprising the step of receiving the request for providing the content being encoded using a second coding algorithm from the coding sink and a step of requesting a content being encoded using the first coding algorithm from a content source. The method further comprising a step of receiving the content being encoded using the first coding algorithm from the content source and processing the encoded content using the first coding algorithm getting transcoded content being encoded using the second coding algorithm. The method further comprises a step of providing the transcoded content to the content sink.

The present invention is based on the finding that an autonomous transcoding unit, to which a content sink requests a certain content in a certain format, can save valuable transmission resources and time by requesting the content directly from a source, the content being encoded using generally any encoding algorithm. As the request from the content sink was directed to the apparatus for transcoding, and the content for transcoding is requested by the apparatus for transcoding, the content not being decodable at the sink only has to be transmitted once from the content source to the apparatus for transcoding. The apparatus for transcoding can then transcode the content immediately and provides the content in the requested format to the content sink.

Embodiments of the present invention will be detailed utilizing the figures enclosed, of which
- Fig. 1: shows a block diagram of an embodiment of the present invention;
- Fig. 2: shows an embodiment of a network where the inventive apparatus can be utilized;
- Fig. 3: shows a message sequence chart as an embodiment of the inventive method; and
- Fig. 4: shows the state of the art transcoding procedure.

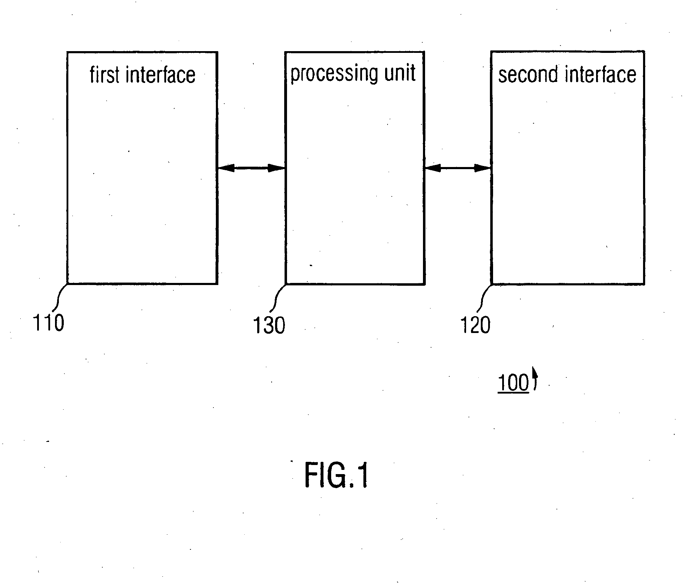

Fig. 1 displays an inventive apparatus 100 for transcoding encoded content, the encoded content being encoded using a first coding algorithm, with a first interface 110 for communicating with a content sink, the first interface 110 being adapted for receiving a request for content being encoded using a second coding algorithm and for providing a transcoded content being encoded using the second coding algorithm. The inventive apparatus 100 further comprises a second interface 120 for communicating with a content source, being adapted for providing a request for encoded content being encoded using the first coding algorithm and for receiving the encoded content being encoded using the first coding algorithm; and the apparatus 100 further comprises a processing unit 130 being adapted for processing the encoded content being encoded using the first coding algorithm to provide the transcoded content being encoded using the second coding algorithm.

In one embodiment of the present invention the processing unit 130 is adapted for decoding the encoded content using the first coding algorithm and for encoding the decoded content using the second coding algorithm yielding the transcoded content.

The inventive apparatus 100 can provide a network service, which is able to perform real-time transcoding and transrating services for other devices within the network, for example personal computers or PDAs. In one embodiment of the present invention the communication of the service, i.e. the inventive apparatus 100, with its clients is handled through the UPnP (UPnP = universal plug and play) protocol. The UPnP protocol is a set of computer network protocols promulgated by the UPnP forum. The goals of UPnP are to allow services to connect seamlessly and to simplify the implementation of networks in the home, as far as for example data sharing, communications, and entertainment is concerned, as well as in corporate environments. UPnP achieves this by defining and publishing UPnP device control protocols built upon open, internet-based communication standards. The UPnP architecture offers pervasive peer-to-peer network connectivity of PCs (PC = personal computer), intelligent appliances, and wireless devices. The UPnP architecture is a distributed, open networking architecture that uses TCP/IP (TCP = transfer control protocol, IP = internet protocol) and HTTP (HTTP = hypertext transfer protocol) to enable seamless proximity networking in addition to control and data transfer among networked devices in the home, office, and everywhere in between.

More information about the UPnP can be found at HTTP://upnp.org.

The transcoding service is a "vendor specific service" in terms of the UPnP standard device control protocol (DCP = device control protocol) specification available through the UPnP forum. The service is announced and offered through one or more UPnP devices in the network, as in one embodiment of the present invention the Nero MediaHome. It enables UPnP media renderer devices and UPnP media players to access content available in formats which are not natively supported by the devices themselves. The decoding service offers methods for transferring the original content from the device providing it, called "source" in the following context, through the device hosting the transcoding service, i.e. the inventive apparatus 100 called "transcoder", to the device requesting it, called sink in the following context.

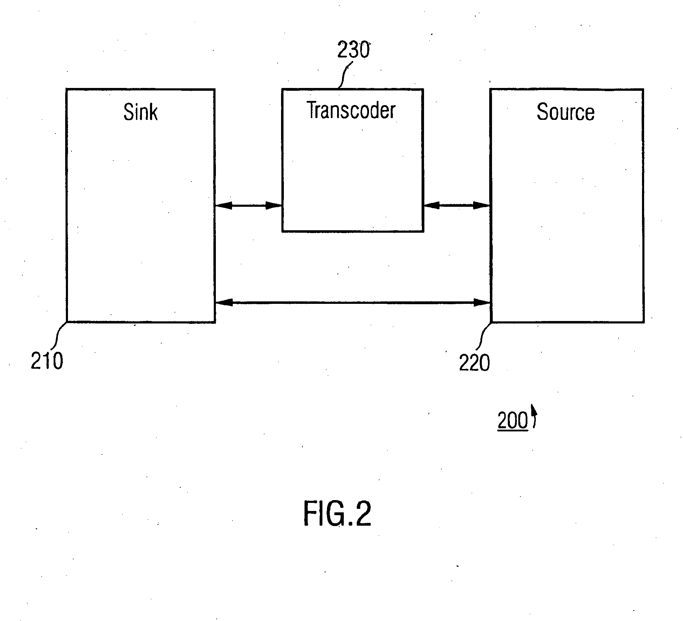

Fig. 2 illustrates an according network scenario 200. The network scenario 200 comprises a content sink 210, a content source 220 and a transcoder 230. In embodiments of the present invention the inventive apparatus 100 is comprised in the transcoder 230, realizing an inventive apparatus 100 for transcoding, where the first interface 110 or the second interface 120 can be adapted for communicating through UPnP protocol.

As indicated by the double-sided arrows in Fig. 2, information is transferred between the three network entities. While the transfer is performed the format of the original content might get real-time transcoded or transrated by the transcoder device. In other words, the transcoder 230 device is proxying the content from the source 220 device and is able to convert it to different formats in real-time during transfer to the sink 210 device.

According to embodiments of the present invention as source 220 device all UPnP media servers are applicable, especially including but not restricted to so-called DMS (DMS = digital media server) devices following the DLNA (DLNA = digital living network alliance) v1.5 guidelines, which can for example be found at http://dlna.org. Sink 210 devices can be implemented as UPnP media renderers and UPnP control points are applicable, especially including but not restricted to so called DMR (DMR = digital media renderer) and DMP (DMP = digital media player) devices following the DLNA v1.5 guidelines.

The transcoder 230, i.e. the inventive apparatus 100, can in one preferred embodiment be implemented as the Nero MediaHome product. The service provided by the transcoder 230 is mainly targeted for low performance source 220 and sink 210 devices, which are not able to perform the transcoding operation on their own. Many devices, as for example PDAs, mobile phones, portable computers, etc. are not able to carry out the transcoding operation by themselves, for example due to limited memory or low CPU (CPU = central processing unit) performance in embedded systems or networked consumer electronic devices. The present invention provides the advantage that these devices can now rely upon a third component, i.e. the inventive apparatus 100, transparently handling the transcoding process whenever required.

The discovery of the transcoding service on the transcoder 230 device is fully handled by UPnP device specification. This means that the transcoder 230 device is multicasting SSDP (SSDP = simple service discovery protocol) "notify" packets in regular intervals and is answering accordingly if it receives a SSDP "discover" packet. In other embodiments of the present invention the device discovery might not be limited solely to UPnP but extended to other protocols and network infrastructures in the future as for example WLAN (WLAN = wireless local area network) or bluetooth.

The transcoding service itself offers different actions allowing the sink 210 to retrieve information about which source and target formats are supported. For each supported source format, as for example WAVE audio (WAVE = waveform audio format used by Microsoft Windows and IBM) a distinct set of target formats, as for example MPEG-4 (MPEG = moving pictures expert group), AAC (AAC = advanced audio coding), or MPEG-1 layer 3, might be supported. The list of supported source and target formats is dependent upon the capability of the transcoding service implementation and is not scope of the present invention. In general all conceivable formats can be supported.

After both the sink 210 and the transcoder 230 have negotiated a format in which the source content will be transcoded while transferred, the sink 210 could for example initiate the transfer via an HTTP GET request to the transcoder 230 device. The transcoder 230 device on its part will open a HTTP connection to stream the original content from the source 220 device in one embodiment of the present invention.

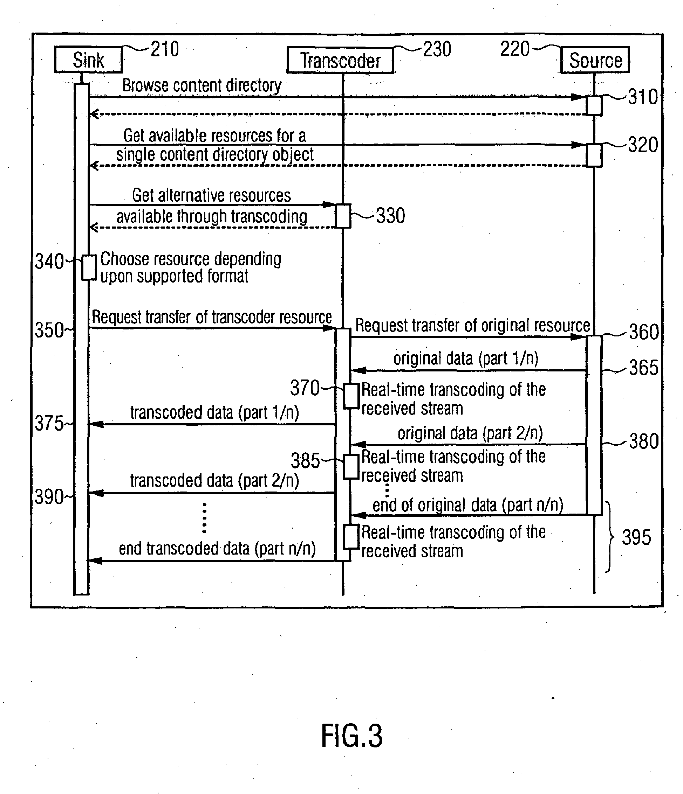

Fig. 3 shows the mechanism in detail. In Fig. 3 the sink 210, the source 220 and the transcoder 230 are displayed. Furthermore, Fig. 3 shows a message sequence chart of an exemplified communication between these three network entities. In a first step 310 the sink 210 browses the content directory of the source 220 in order to identify a desired content. Once the desired content was identified, the sink 210 needs to retrieve the available resources for the desired content from the source 220. This is carried out in the second step 320 where the sink 210 gets available resources for a single content directory object from the source 220. In the third step 330 the sink 210 can get information from the transcoder 230, on what alternative resources are available for transcoding. The next step 340 comprising the sink 210 making up a choice on the desired resource depending upon the supported formats. After the sink 210 has chosen the format, it can issue a request for the transfer of transcoded content to the transcoder 230, which is indicated in step 350 in Fig. 3. Once the transcoder 230 has received the request from the sink 210 it issues a request to the source 220 for transfer of the original source in a step 360. The source 220 then provides the first part of the original data to the transcoder 230 in step 365, upon which the transcoder 230 starts real-time transcoding of the received data part in step 370. After the first data part has been transcoded in step 370, the transcoder 230 can provide the first transcoded data part to the sink 210 in step 375. In the meantime, or in another embodiment of the present invention also after that, the source 220 can provide the second data part in a step 380 to the transcoder 230, which in turn starts the real-time transcoding of the second received data part in a step 385. The real-time transcoded data can then be provided to the sink 210 in a step 390. The procedure continues until the last data packet is provided from the source 220 to the transcoder 230, which real-time transcodes the last data packet and also provides it to the sink 210 which is indicated in the step 395 in Fig. 3.

It is an advantage of the present invention that the source 220 device does not need to know about any of the mechanisms mentioned as part of the description of Fig. 3. After the sink 210 device has chosen the best fitting format all further requests are handled via the transcoder 230 device as it would be the sink 210 itself. So the transcoder 230 becomes sink 210 from the source 220 point of view and the source 220 from the sink 210 point of view.

The present invention provides the advantage that devices, which are not capable of carrying out transcoding of formats, can receive transcoded content in real-time. Another advantage of the present invention is, that in general devices do not need to keep an updated database of different coding algorithms. Nowadays new coding algorithms are developed frequently, and the according decoders and encoders need to be updated frequently. With the inventive apparatus 100, a central transcoding entity is provided, which can serve as a content source to network devices, in one embodiment of the present invention transcoding all conceivable content formats into a single format, which would be the preferred format of a network entity requesting the content.

Depending on certain implementation requirements of the inventive methods, the inventive methods can be implemented in hardware or in software. The implementation can be performed using a digital storage medium, in particular a disc, DVD or a CD having electronically readable control signals stored thereon, which cooperate with a programmable computer system such that the inventive methods are performed. Generally, the present invention is, therefore, a computer program product with a program code stored on a machine-readable carrier, the program code being operative for performing the inventive method when the computer program product runs on a computer. In other words, the inventive methods are, therefore, a computer program having a program code for performing at least one of the inventive methods when the computer program runs on a computer.

### List of References

- 100: Apparatus
- 110: first interface
- 120: second interface
- 130: processing unit

- 200: network scenario
- 210: sink
- 220: source
- 230: transcoder

- 310: first step, browse content directory
- 320: second step, get available resources for a single content directory object
- 330: third step, get alternative resources available for transferring
- 340: fourth step, resource depending on the supported formats
- 350: fifth step, request transfer of transcoded resource
- 360: sixth step, request transfer of original resource
- 365: seventh step, provision of first part of original data
- 370: eighth step, real-time transcoding of the received stream
- 375: ninth step, provision of the first part of transcoded data
- 380: tenth step, provision of the second part of original data
- 385: eleventh step, real-time transcoding of the second part of the original data
- 390: twelfth step, provision of the second part of the transcoded data
- 395: thirteenth step, provision of the last of the original data, real-time transcoding of the received original data and provision of the last parts of the transcoded data
- 410: content sink
- 420: content source
- 430: transcoder

## Claims

1. Apparatus (100) for transcoding encoded content, the encoded content being encoded in accordance with a first coding algorithm, comprising:
a first interface (110) for communicating with a content sink (210), the first interface (110) being adapted
for receiving, from the content sink (210), a request for information on supported source and target formats for providing transcoded content being encoded in accordance with a second coding algorithm for the encoded content being encoded in accordance with the first coding algorithm,
for providing said information on the supported source and target formats to the content sink (210),
for receiving a request (350), from the content sink (210), for the transcoded content being encoded in accordance with the second coding algorithm, the second coding algorithm being chosen (340) by the content sink (210) based on the information on the supported source and target formats provided by the first interface (110), and
for providing (375, 390) the transcoded content being encoded in accordance with the second coding algorithm to the content sink (210);
a second interface (120) for communicating with a content source (220), the second interface being adapted for
providing (360) a request for the encoded content being encoded in accordance with the first coding algorithm to the content source (220), and
for receiving the encoded content being encoded in accordance with the first coding algorithm from the content source (220); and
a processing unit (130) being adapted for transcoding the encoded content being encoded in accordance with the first coding algorithm into the transcoded content being encoded in accordance with the second coding algorithm.

2. Apparatus (100) of claim 1, wherein the processing unit (130) is adapted for decoding the encoded content in accordance with the first coding algorithm and for encoding the decoded content in accordance with the second coding algorithm yielding the transcoded content.

3. Apparatus (100) of one of the preceding claims, wherein the first interface (110) is adapted for communicating through the UPnP protocol or the second interface (120) is adapted for communicating through the UPnP protocol.

4. Apparatus (100) of one of the preceding claims, wherein the first interface (110) or the second interface (120) is adapted for multicasting SSDP-notify packets.

5. Apparatus (100) of one of the preceding claims, wherein the first or the second interface (110; 120) is adapted for receiving and reacting to SSDP-discover packets.

6. Apparatus (100) of one of the preceding claims, further comprising an interface for a wireless network.

7. Apparatus (100) of one of the preceding claims, wherein the first interface (110) is adapted for receiving an HTTP GET request from the content sink and for streaming the transcoded content to the sink.

8. Apparatus (100) of one of the preceding claims, wherein the second interface (120) is adapted for establishing a streaming HTTP connection with the content source.

9. Apparatus (100) of one of the preceding claims, wherein the processing unit (130) is adapted for providing the transcoded content in real-time.

10. Apparatus (100) of one of the preceding claims, being implemented as part of a Nero MediaHome product.

11. Apparatus (100) of one of the preceding claims, wherein the second interface (120) is adapted for being provided with a first and a second part of the encoded content being encoded with the first coding algorithm,
the processing unit (130) being adapted for processing the first and the second part of the encoded content being encoded in accordance with the first coding algorithm to provide a first and a second part of encoded content being encoded in accordance with the second coding algorithm,
the first interface (110) being adapted for providing the first and the second part of the encoded content being encoded in accordance with the second coding algorithm to the content sink, and
the second interface (120) being further adapted for being provided with the second part of the encoded content being encoded in accordance with the first coding algorithm while or after the processing unit (130) processing the first part of the encoded content being encoded in accordance with the first coding algorithm or the first interface (110) providing the first part of the encoded content being encoded in accordance with the second coding algorithm.

12. Method for providing transcoded content to a content sink (210), the encoded content being encoded in accordance with a first coding algorithm, the method comprising the steps of:
receiving, from the content sink (210), a request for information on supported source and target formats for providing transcoded content being encoded in accordance with a second coding algorithm for the encoded content being encoded in accordance with the first encoding algorithm;
providing said information on the supported source and target formats to the content sink (210);
receiving a request (350), from the content sink (210), for the transcoded content being encoded in accordance with the second coding algorithm, the second coding algorithm being chosen (340) by the content sink (210) based on the information on the supported source and target formats provided in the step of providing said information on the supported source and target formats;
requesting (360) an encoded content being encoded in accordance with the first coding algorithm from the content source (220);
receiving the encoded content being encoded in accordance with the first coding algorithm from the content source (220);
transcoding the encoded content being encoded in accordance with the first coding algorithm into the transcoded content being encoded in accordance with the second coding algorithm; and
providing the transcoded content to the content sink (210).

13. Computer program having a program code for performing the method of claim 12, when the computer program runs on a computer.

## Patentansprüche

1. Vorrichtung (100) zum Umcodieren eines codierten Inhalts, wobei der codierte Inhalt gemäß einem ersten Codierungsalgorithmus codiert ist, mit folgenden Merkmalen:
einer ersten Schnittstelle (110) zum Kommunizieren mit einer Inhaltssenke (210), wobei die erste Schnittstelle (110) dazu angepasst ist,
von der Inhaltssenke (210) eine Anforderung bezüglich Informationen über unterstützte Quellen- und Zielformate zu empfangen, um für den codierten Inhalt, der gemäß dem ersten Codierungsalgorithmus codiert ist, einen umcodierten Inhalt bereitzustellen, der gemäß einem zweiten Codierungsalgorithmus codiert ist,
die Informationen über die unterstützten Quellen- und Zielformate der Inhaltssenke (210) bereitzustellen,
von der Inhaltssenke (210) eine Anforderung (350) bezüglich des umcodierten Inhalts, der gemäß dem zweiten Codierungsalgorithmus codiert ist, zu empfangen, wobei der zweite Codierungsalgorithmus seitens der Inhaltssenke (210) auf der Basis der durch die erste Schnittstelle (110) bereitgestellten Informationen über die unterstützten Quellen- und Zielformate ausgewählt (340) ist, und
den umcodierten Inhalt, der gemäß dem zweiten Codierungsalgorithmus codiert ist, der Inhaltssenke (210) bereitzustellen (375, 390);
einer zweiten Schnittstelle (120) zum Kommunizieren mit einer Inhaltsquelle (220), wobei die zweite Schnittstelle dazu angepasst ist,
der Inhaltsquelle (220) eine Anforderung bezüglich des codierten Inhalts, der gemäß dem ersten Codierungsalgorithmus codiert ist, bereitzustellen (360), und
den codierten Inhalt, der gemäß dem ersten Codierungsalgorithmus codiert ist, von der Inhaltsquelle (220) zu empfangen; und
einer Verarbeitungseinheit (130), die dazu angepasst ist, den codierten Inhalt, der gemäß dem ersten Codierungsalgorithmus codiert ist, zu dem umcodierten Inhalt, der gemäß dem zweiten Codierungsalgorithmus codiert ist, umzucodieren.

2. Vorrichtung (100) gemäß Anspruch 1, bei der die Verarbeitungseinheit (130) dazu angepasst ist, den codierten Inhalt gemäß dem ersten Codierungsalgorithmus zu decodieren und den decodierten Inhalt gemäß dem zweiten Codierungsalgorithmus zu codieren, was den umcodierten Inhalt ergibt.

3. Vorrichtung (100) gemäß einem der vorhergehenden Ansprüche, bei der die erste Schnittstelle (110) dazu angepasst ist, durch das UPnP-Protokoll zu kommunizieren, oder die zweite Schnittstelle (120) dazu angepasst ist, durch das UPnP-Protokoll zu kommunizieren.

4. Vorrichtung (100) gemäß einem der vorhergehenden Ansprüche, bei der die erste Schnittstelle (110) oder die zweite Schnittstelle (120) zum Sammelsenden von SSDP-Benachrichtigungspaketen angepasst ist.

5. Vorrichtung (100) gemäß einem der vorhergehenden Ansprüche, bei der die erste oder die zweite Schnittstelle (110; 120) zum Empfangen von und Reagieren auf SSDP-Entdeckungspakete(n) angepasst ist.

6. Vorrichtung (100) gemäß einem der vorhergehenden Ansprüche, die ferner eine Schnittstelle für ein drahtloses Netzwerk aufweist.

7. Vorrichtung (100) gemäß einem der vorhergehenden Ansprüche, bei der die erste Schnittstelle (110) zum Empfangen einer HTTP-GET-Anforderung von der Inhaltssenke und zum Streamen des umcodierten Inhalts zu der Senke angepasst ist.

8. Vorrichtung (100) gemäß einem der vorhergehenden Ansprüche, bei der die zweite Schnittstelle (120) zum Einrichten einer Streaming-HTTP-Verbindung mit der Inhaltsquelle angepasst ist.

9. Vorrichtung (100) gemäß einem der vorhergehenden Ansprüche, bei der die Verarbeitungseinheit (130) zum Bereitstellen des umcodierten Inhalts in Echtzeit angepasst ist.

10. Vorrichtung (100) gemäß einem der vorhergehenden Ansprüche, die als Bestandteil eines Nero-MediaHome-Produkts implementiert ist.

11. Vorrichtung (100) gemäß einem der vorhergehenden Ansprüche, bei der die zweite Schnittstelle (120) dazu angepasst ist, mit einem ersten und einem zweiten Teil des codierten Inhalts, der mit dem ersten Codierungsalgorithmus codiert ist, versehen zu werden,
wobei die Verarbeitungseinheit (130) dazu angepasst ist, den ersten und den zweiten Teil des codierten Inhalts, der gemäß dem ersten Codierungsalgorithmus codiert ist, zu verarbeiten, um einen ersten und einen zweiten Teil des codierten Inhalts, der gemäß dem zweiten Codierungsalgorithmus codiert ist, bereitzustellen,
wobei die erste Schnittstelle (110) dazu angepasst ist, den ersten und den zweiten Teil des codierten Inhalts, der gemäß dem zweiten Codierungsalgorithmus codiert ist, der Inhaltssenke bereitzustellen, und
wobei die zweite Schnittstelle (120) ferner dazu angepasst ist, mit dem zweiten Teil des codierten Inhalts, der gemäß dem ersten Codierungsalgorithmus codiert ist, versehen zu werden, während oder nachdem die Verarbeitungseinheit (130) den ersten Teil des codierten Inhalts, der gemäß dem ersten Codierungsalgorithmus codiert ist, verarbeitet, oder die erste Schnittstelle (110) den ersten Teil des codierten Inhalts, der gemäß dem zweiten Codierungsalgorithmus codiert ist, bereitstellt.

12. Verfahren zum Bereitstellen eines umcodierten Inhalts an eine Inhaltssenke (210), wobei der codierte Inhalt gemäß einem ersten Codierungsalgorithmus codiert ist, wobei das Verfahren folgende Schritte aufweist:
Empfangen, von der Inhaltssenke (210), einer Anforderung bezüglich Informationen über unterstützte Quellen- und Zielformate, um für den codierten Inhalt, der gemäß dem ersten Codierungsalgorithmus codiert ist, einen umcodierten Inhalt bereitzustellen, der gemäß einem zweiten Codierungsalgorithmus codiert ist;
Bereitstellen der Informationen über die unterstützten Quellen- und Zielformate an die Inhaltssenke (210);
Empfangen, von der Inhaltssenke (210), einer Anforderung (350) bezüglich des umcodierten Inhalts, der gemäß dem zweiten Codierungsalgorithmus codiert ist, wobei der zweite Codierungsalgorithmus seitens der Inhaltssenke (210) auf der Basis der Informationen über die unterstützten Quellen- und Zielformate, die in dem Schritt des Bereitstellens der Informationen über die unterstützten Quellen- und Zielformate bereitgestellt werden, ausgewählt (340) wird;
Anfordern (360) eines codierten Inhalts, der gemäß dem ersten Codierungsalgorithmus codiert ist, von der Inhaltsquelle (220);
Empfangen des codierten Inhalts, der gemäß dem ersten Codierungsalgorithmus codiert ist, von der Inhaltsquelle (220);
Umcodieren des codierten Inhalts, der gemäß dem ersten Codierungsalgorithmus codiert ist, zu dem umcodierten Inhalt, der gemäß dem zweiten Codierungsalgorithmus codiert ist; und
Bereitstellen des umcodierten Inhalts an die Inhaltssenke (210).

13. Computerprogramm, das einen Programmcode zum Durchführen des Verfahrens gemäß Anspruch 12 aufweist, wenn das Computerprogramm auf einem Computer läuft.

## Revendications

1. Dispositif (100) pour le transcodage d'un contenu codé, le contenu codé étant codé selon un premier algorithme de codage, comprenant:
une première interface (110) destinée à communiquer avec un réservoir de contenu (210), la première interface (110) étant adaptée
pour recevoir, du réservoir de contenu (210), une demande d'informations sur les formats de source et cibles supportés pour fournir un contenu transcodé qui est codé selon un deuxième algorithme de codage, pour le contenu codé qui est codé selon le premier algorithme de codage,
pour fournir lesdites informations sur les formats de source et cibles supportés au réservoir de contenu (210),
pour recevoir une demande (350), du réservoir de contenu (210), de contenu transcodé qui est codé selon le deuxième algorithme de codage, le deuxième algorithme de codage étant choisi (340) par le réservoir de contenu (210) sur base des informations sur les formats de source et cibles supportés fournies par la première interface (110), et
pour fournir (375, 390) le contenu transcodé qui est codé selon le deuxième algorithme de codage au réservoir de contenu (210);
une deuxième interface (120) destinée à communiquer avec une source de contenu (220), la deuxième interface étant adaptée pour
fournir (360) une demande de contenu codé qui est codé selon le premier algorithme de codage à la source de contenu (220), et
recevoir le contenu codé qui est codé selon le premier algorithme de codage de la source de contenu (220); et
une unité de traitement (130) adaptée pour transcoder le contenu codé qui est codé selon le premier algorithme de codage, pour obtenir le contenu transcodé qui est codé selon le deuxième algorithme de codage.

2. Dispositif (100) selon la revendication 1, dans lequel l'unité de traitement (130) est adaptée pour décoder le contenu codé selon le premier algorithme de codage et pour coder le contenu décodé selon le deuxième algorithme de codage donnant le contenu transcodé.

3. Dispositif (100) selon l'une des revendications précédentes, dans lequel la première interface (110) est adaptée pour communiquer par l'intermédiaire du protocole UPnP ou la deuxième interface (120) est adaptée pour communiquer par l'intermédiaire du protocole UPnP.

4. Dispositif (100) selon l'une des revendications précédentes, dans lequel la première interface (110) ou la deuxième interface (120) est adaptée pour multidiffuser des paquets de notification de SSDP.

5. Dispositif (100) selon l'une des revendications précédentes, dans lequel la première ou la deuxième interface (110; 120) est adaptée pour recevoir et réagir à des paquets de découverte de SSDP.

6. Dispositif (100) selon l'une des revendications précédentes, comprenant par ailleurs une interface pour un réseau sans fil.

7. Dispositif (100) selon l'une des revendications précédentes, dans lequel la première interface (110) est adaptée pour recevoir une requête de HTTP GET du réservoir de contenu et pour diffuser en transit le contenu transcodé vers le réservoir.

8. Dispositif (100) selon l'une des revendications précédentes, dans lequel la deuxième interface (120) est adaptée pour établir une connexion de HTTP de diffusion en transit avec la source de contenu.

9. Dispositif (100) selon l'une des revendications précédentes, dans lequel l'unité de traitement (130) est adaptée pour fournir le contenu transcodé en temps réel.

10. Dispositif (100) selon l'une des revendications précédentes, mis en oeuvre comme partie d'un produit Nero MediaHome.

11. Dispositif (100) selon l'une des revendications précédentes, dans lequel la deuxième interface (120) est adaptée pour être alimentée par une première et une deuxième partie du contenu codé qui est codé par le premier algorithme de codage,
l'unité de traitement (130) étant adapté pour traiter la première et la deuxième partie du contenu codé qui est codé selon le premier algorithme de codage, pour fournir une première et une deuxième partie de contenu codé qui est codé selon le deuxième algorithme de codage,
la première interface (110) étant adaptée pour fournir la première et la deuxième partie du contenu codé qui est codé selon le deuxième algorithme de codage au réservoir de contenu, et
la deuxième interface (120) étant par ailleurs adaptée pour être alimentée par la deuxième partie du contenu codé qui est codé selon le premier algorithme de codage, pendant ou après que l'unité de traitement (130) traite la première partie du contenu codé qui est codé selon le premier algorithme de codage ou que la première interface (110) fournit la première partie du contenu codé qui est codé selon le deuxième algorithme de codage.

12. Procédé pour fournir un contenu transcodé à un réservoir de contenu (210), le contenu codé étant codé selon un premier algorithme de codage, le procédé comprenant les étapes consistant à:
recevoir, du réservoir de contenu (210), une demande d'informations sur les formats de source et cibles supportés pour fournir un contenu transcodé qui est codé selon un deuxième algorithme de codage, pour le contenu codé qui est codé selon le premier algorithme de codage;
fournir lesdites informations sur les formats de source et cibles supportés au réservoir de contenu (210);
recevoir une demande (350), du réservoir de contenu (210), de contenu transcodé qui est codé selon le deuxième algorithme de codage, le deuxième algorithme de codage étant choisi (340) par le réservoir de contenu (210) sur base des informations sur les formats de source et cibles supportés fournies à l'étape de fourniture desdites informations sur les formats de source et cibles supportés;
demander (360) un contenu codé qui est codé selon le premier algorithme de codage de la source de contenu (220);
recevoir le contenu codé qui est codé selon le premier algorithme de codage de la source de contenu (220);
transcoder le contenu codé qui est codé selon le premier algorithme de codage, pour obtenir le contenu transcodé qui est codé selon le deuxième algorithme de codage; et
fournir le contenu transcodé au réservoir de contenu (210).

13. Programme d'ordinateur présentant un code de programme pour réaliser le procédé selon la revendication 12 lorsque le programme d'ordinateur est exécuté sur un ordinateur.
